# EUROPEAN PATENT SPECIFICATION

(11) **EP 2 531 345 B1**
(45) Date of publication and mention of the grant of the patent: **03.04.2019**
(21) Application number: 11736577.5
(22) Date of filing: 01.02.2011
(51) Int. Cl.: B29D 11/00, H01L 33/00, B29C 45/16, B29C 45/00, B29L 11/00

(54) **LENS MOLDED WITH EMBEDDED LAYERS OF THE SAME RESIN USING A TWO STEP INJECTION MOLDING PROCESS.**
LINSE MIT EINGEBETTETEN SCHICHTEN AUS GLEICHEM HARZ, HERGESTELLT DURCH EIN ZWEI-SCHRITT-SPRITZGIESSVERFAHREN.
LENTILLE MOULÉE AVEC DES COUCHES INCRUSTÉES DE LA MÊME RÉSINE UTILISANT UN PROCÉDÉ DE MOULAGE PAR INJECTION À DEUX ÉTAPES.

(30) Priority: 01.02.2010 US 300201 P
(43) Date of publication of application: 12.12.2012
(73) Proprietor: DBM Reflex Enterprises Inc., Laval, Quebec H7L 5C7 (CA)
(72) Inventor: CHOQUET, Eric, Blainville, Québec 7JB 1N9 (CA)
(74) Representative: Grünecker Patent- und Rechtsanwälte PartG mbB
(86) International application number: PCT/CA2011/000129
(87) International publication number: WO 2011/091529

(56) References cited:
- EP-A1- 1 857 246
- WO-A1-94/23929
- CA-A1- 2 691 219
- FR-A1- 2 386 411
- US-A- 3 466 700
- US-A- 5 642 228
- US-A1- 2004 155 171
- US-B1- 6 290 882
- US-B2- 7 261 448

## Description

### Field of Invention

The present invention relates to an illumination apparatus including a solid state light source and an injection molded lens. More particularly, the present invention relates to an illumination apparatus including an LED illumination source and a thick injection molded lens that is free from distortions caused by the injection molding process.

### Background

There are numerous illumination systems where incandescent light sources are used with glass optics. The heat generated by the light source has been reduced in several known applications by using the so called cold mirrors and IR filters that remove or reduce the infrared spectrum. This approach lowers the heat generated upon the glass lenses that can thus perform properly.

Solid state illumination sources and optical systems using solid state sources have been extensively used in many applications, such as in bar code readers, optical communication systems, flat image displays, CD and DVD players, automotive, medical etc.

More recently white LEDs and specially designed lenses have found applications for automotive applications such head lights. These lenses need to be relatively thicker and they can be made by plastic resins since the LEDs do not generate the heat associated with incandescent lights.

Thicker injection molded lens are not easy to manufacture because they tend to shrink during the cooling step in a manner that reduces their accuracy and performance.

Using the known injection compression methods require an expensive equipment, a more elaborate control system and create other injection molding issues that impact the quality of a thick plastic lens such the batch to batch consistency and surface accuracy.

Using multi steps injection methods such as rotary molds or shuttle molds to inject two or more layers of the same resin one on top of the other with a clear boundary surface between each layer have been used for several years. In several applications that require more stringent tolerances of the shape and the curvatures of the lens these methods do not guarantee the expected tolerances of a thick lens.

There is a need to be able to more consistently insure the dimensional and functional tolerances of a thick molded plastic lens by using and injection molding equipment and method that offers a competitive cycle time, improved cooling and an optimal flow of the molten material in the injection cavity. In this application a thick lens is defined by the standard understanding in the industry that defines the ratio between the key dimensions of the lens.

The published patent application US 2004/0155171 A1 discloses a method of molding a part and a molded part made using a molten plastic material. During manufacturing, the plastic melt is injected to create a first form having a plurality of spaced-apart cavities separated by ribs. The cavities are opened from one side only. A second form is created by injecting the molten plastic material over the first form. The material enters each individual cavity from their open side and the material fills the cavities. The second form fuses with the first form once the material hardens.

### Summary of the Invention

The present application teaches an improved and novel solid state illumination system for a variety of applications where a thick injection molded lens or lenses are manufactured using a two step injection process of the same resin in two cavities. In the first shot a first amount of molded resin to form a first layer of the thick lens is generated. This layer includes at least two elongated baffles aligned with respect to a mold gate. In a second shot the first layer is part of the mold cavity and a second shot of the same material is injected over the first layer and in between the at least two baffles through another mold gate. This gate is aligned with the baffles so that the second shot follows a mold filling path along the baffles. In this manner the venting of the mold is done properly removing the gas and insuring that no bubbles are formed in the lens.

The present application further teaches various novel features such as a thick lens molded with a first layer having multiple (more than two) baffles and baffles of similar shape and sizes or baffles having different shapes of sizes within the same lens.

### Brief description of the drawings

The invention can be more understood from the following drawings that are intended to provide stand alone or additional and specific design details that do not limit the scope of the invention. Sizes and shapes of the elements of the lens and LED dies in the drawings are approximate and may not be at scale.
**Fig. 1** shows an automotive head lamp using a thick lens an incandescent light source and a glass thick lens;
**Figs. 2-3** show a known automotive head lamp using an LED light source and a thick plastic lens made in a single injection molding shot;
**Fig. 4** shows a known thick plastic lens made in a single injection molding shot;
**Fig. 5** shows a known LED and a thin plastic lens made in a single injection molding shot;
**Fig. 6** **a** shows a known thick plastic lens made in a single injection molding shot by using known injection compression methods;
**Fig. 6b** shows a known thick plastic lens having over-molded layers made using known multiple injection molding shots;
**Fig. 7a** shows a novel thick plastic lens having embedded over-molded layers made using multiple injection molding shots. The lens has six elongated baffles.
**Fig. 7b** shows a novel automotive head lamp system using an LED and a novel thick plastic lens having embedded over-molded layers made using multiple injection molding shots. The lens has three elongated baffles.
**Fig. 8** shows an injection molding apparatus used to mold the thick embedded lens of Figs. 7a-b.
**Figs 9a-b-c-d** show how the two shots are layered in the novel thick embedded lens and agate mark in Fig. 9b.
**Figs 10 - 20** show the novel mold components and the first and second layers with the elongated baffles used to create a two shot embedded thick lens.

### Detailed description of the invention

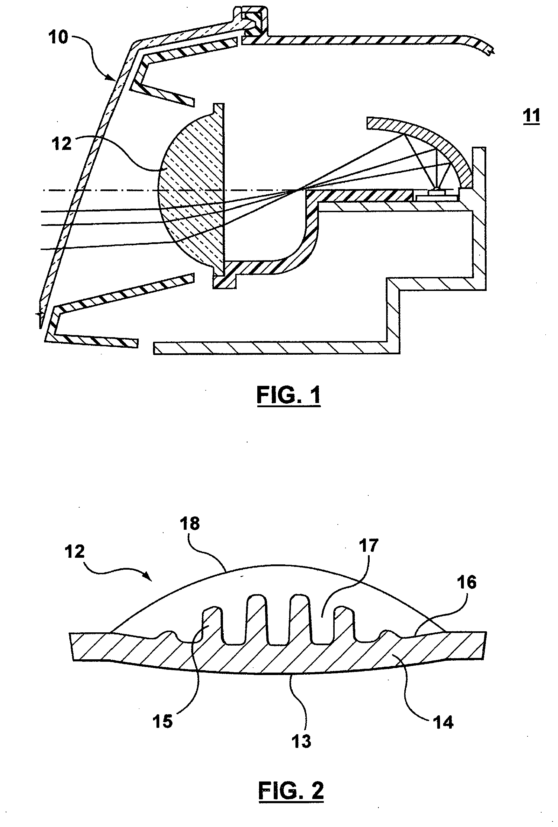

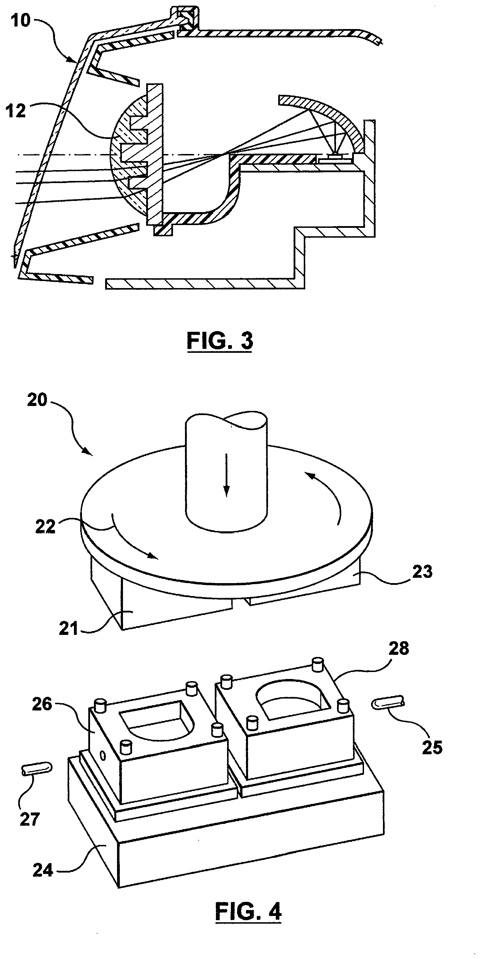

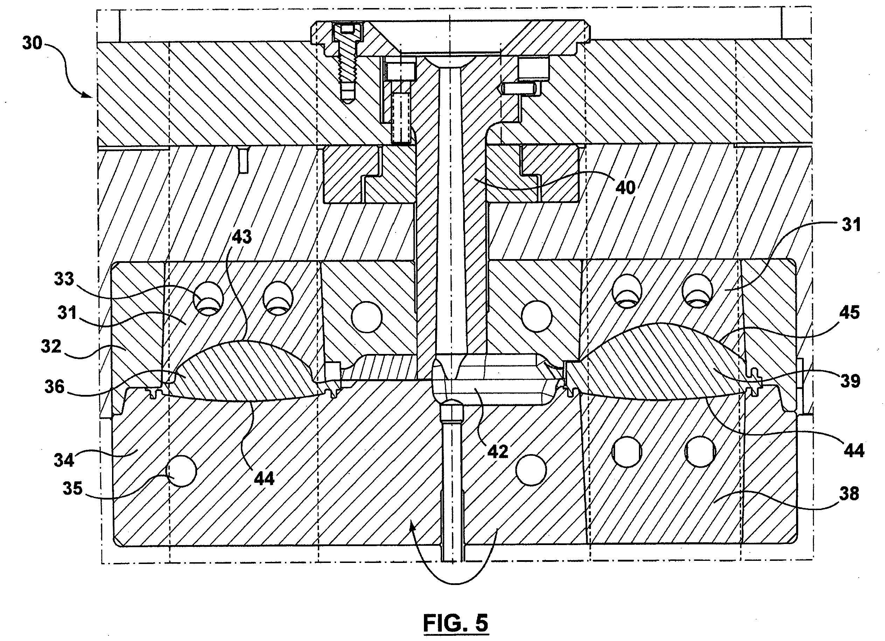

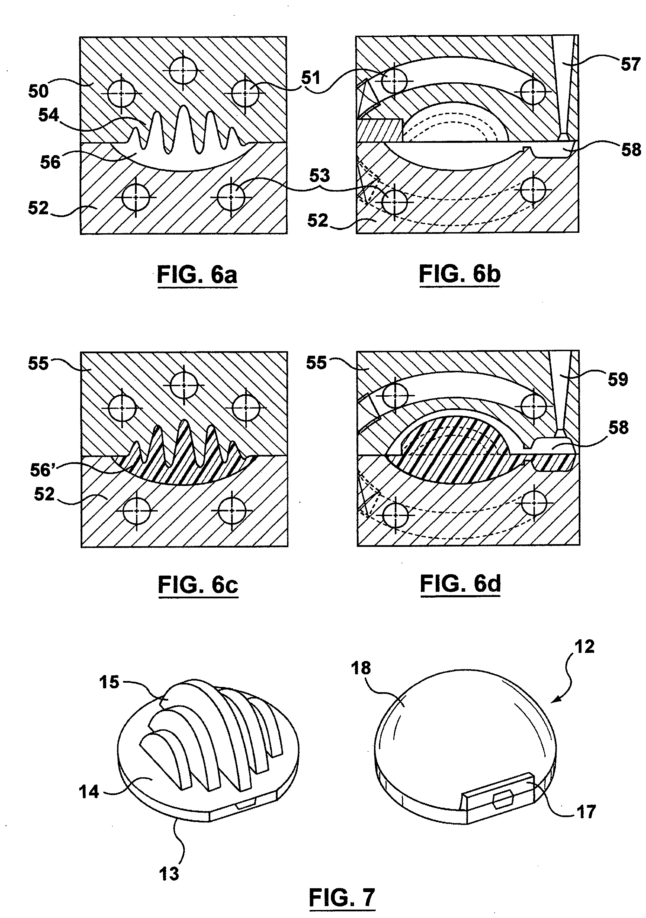

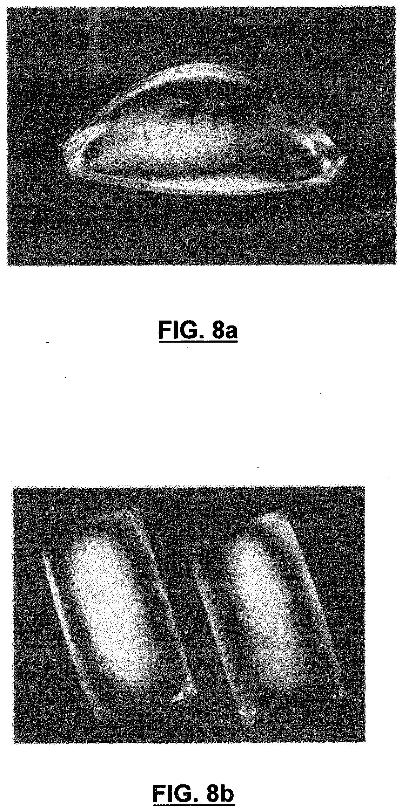

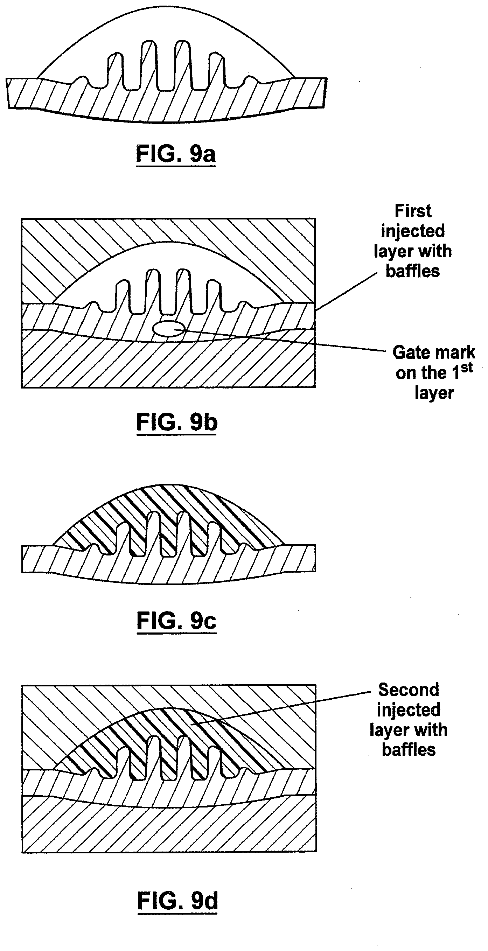

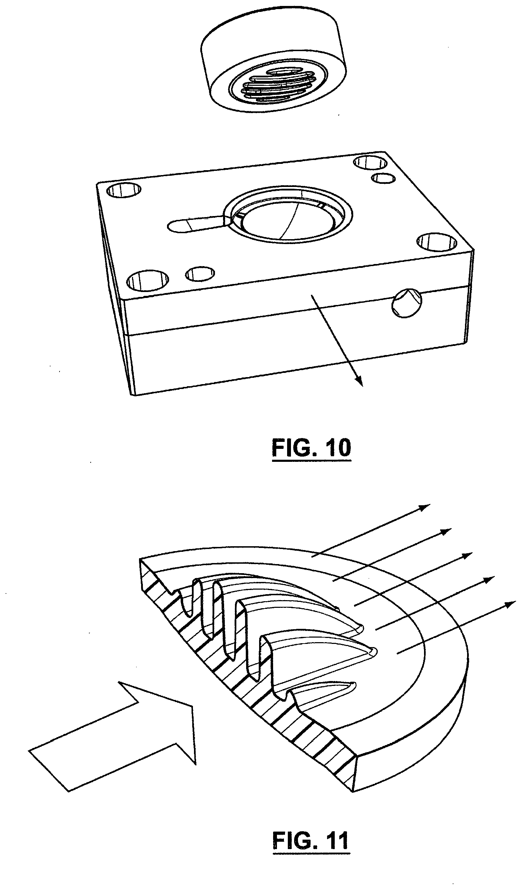

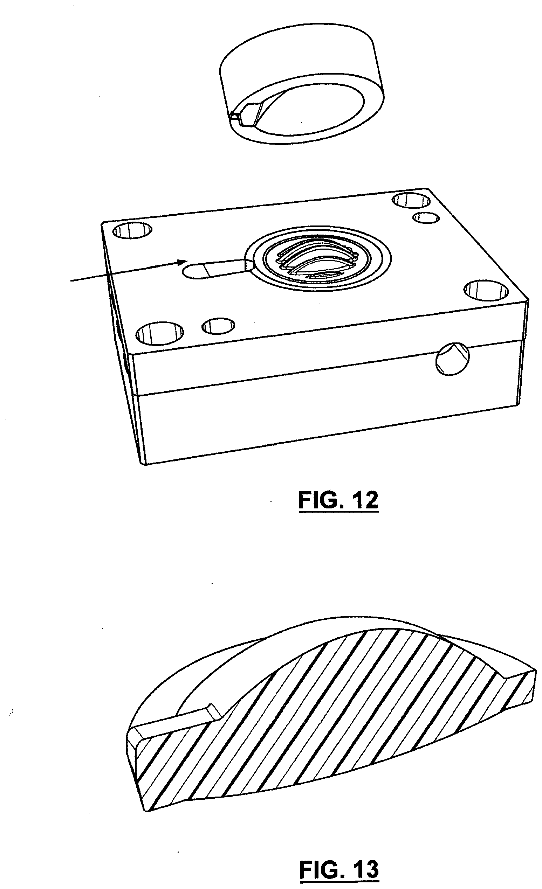

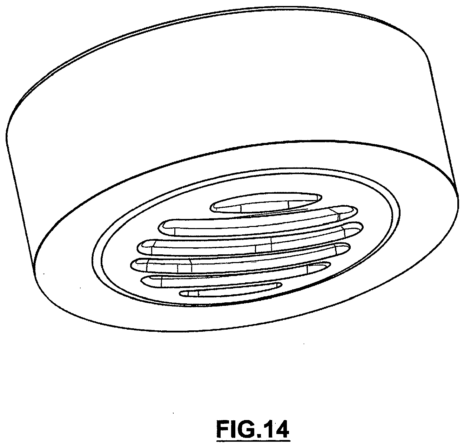

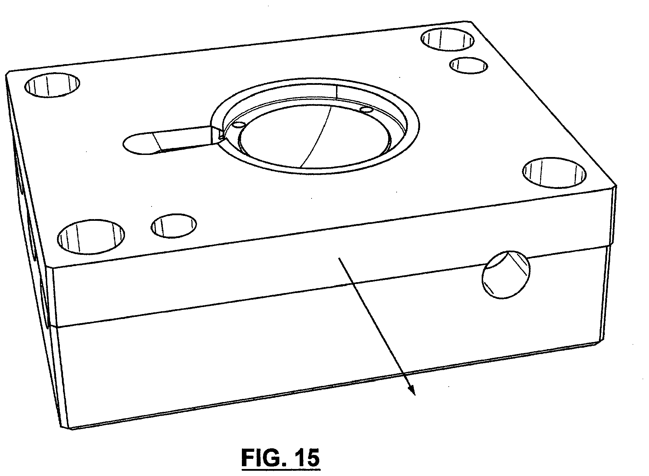

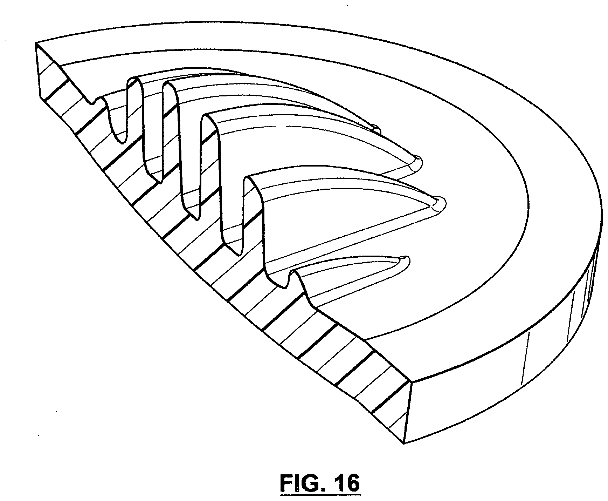

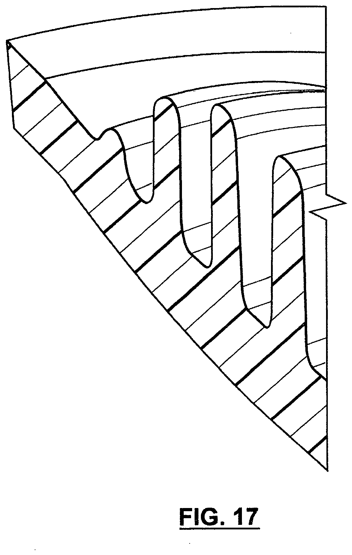

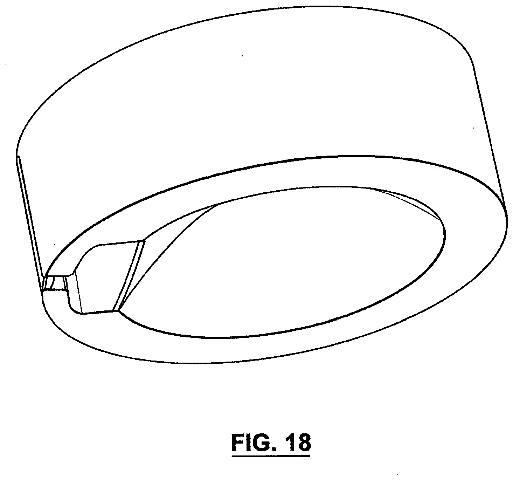

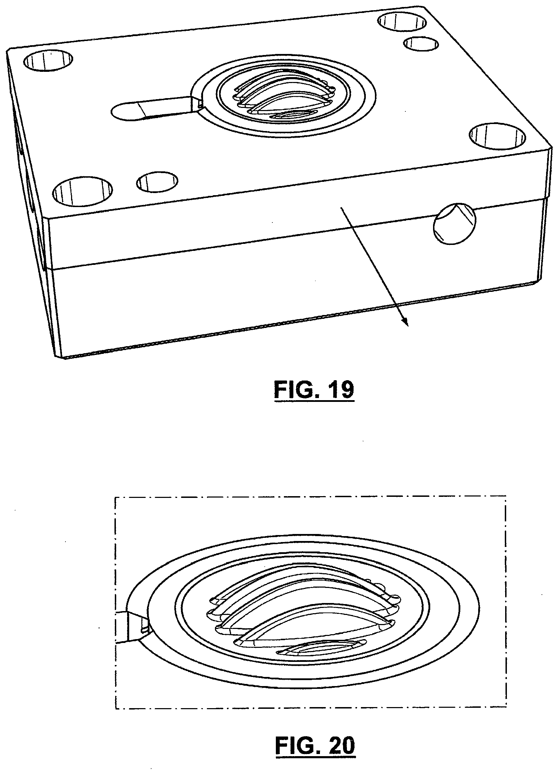

Fig. 1 shows an automotive lamp 10 using an LED 11. The new embedded thick lens 12 made using two injection steps of the same resin according to this application, the new LED based illumination system using the new embedded thick lens
12 and the injection mold components and equipment to manufacture the new embedded thick lens 12 are shown in Figs 1 - 20 described in the previous section.

## Claims

1. A method of injection molding an optical component (12) comprising:
- providing a first mold cavity (36) formed between a first mold cap and a mold core, the first mold cap having a cap injection surface, the mold core having a core injection surface and at least two spaced apart undercuts, each of the undercut having two lateral walls, a depth, a width and a length;
- injecting a first amount of a molten optical material through a first mold gate into the first mold cavity (36), where the mold gate is located opposite to the undercuts in such a manner that the molding material flows into the first mold cavity (36) in a direction parallel to the lateral walls of the undercuts and along the length of the undercuts;
- cooling the optical material in the first mold cavity (36), where the optical material makes cooling contact with the undercut walls so that at the end of the cooling time a first section (14) of the optical component (12) is formed, the first section including at least two elongated baffles (15) formed by the molded material located in the undercuts, where each elongated baffle (15) includes a front surface, an opposed back surface and two lateral surfaces;
- providing a second mold cavity (39) formed between the first section (14) of the optical component (12) and a second mold cap;
- injecting a second amount of the optical material in the second mold cavity (39) through a second mold gate where the mold gate is positioned in alignment with the two lateral surfaces of the elongated baffles (15) to allow the flow of the molten optical material to follow a mold filling path along the elongated baffles (15) and form at least two spaced apart and continuous streams, thereby properly venting the second mold cavity (39) by removing gas and insuring that no bubbles are formed in the molded optical component (12) so that the optical component (12) be free from distortions caused by the injection molding process.

2. An optical lens (12) made by injection molding in a mold through the injection of a single molten material in two injection shots of using a two step process, the optical lens (12) comprising:
- a first surface (13) having a first periphery and a second surface (18) having a second periphery;
- a lens body (14,17) defined between the first surface (13) and the second surface (18) for a light beam to enter the lens through the first surface (13) and exit the lens through the second surface (18) where the first surface (13) is injection molded in the first injection shot and the second surface (18) in a second injection shot;
- a first mold gate mark located at the first periphery and a second mold gate mark located at the second periphery;
- a first melt flow pattern including at least two spaced apart and continuous streams that fully extend within the first periphery injected through the first gate in the first shot and a second flow pattern including at least two spaced apart and continuous streams that fully extend within the second periphery injected through the second gate in the second shot, said first and second flow patterns being visible using optical testing devices.

## Patentansprüche

1. Ein Verfahren zum Spritzgießen eines optischen Bauteils (12) umfassend:
- Bereitstellen eines ersten Formhohlraums (36), der zwischen einer ersten Formkappe und einem Formkern ausgebildet ist, die erste Formkappe weist eine Kappeneinspritzfläche auf, der Formkern weist eine Kerneinspitzfläche und mindestens zwei beabstandete Hinterschneidungen auf, wobei jede der Hinterschneidungen mindestens zwei seitliche Wände, eine Tiefe, eine Breite und eine Länge aufweist;
- Einspritzen einer ersten Menge eines geschmolzenen optischen Materials durch eine erste Formangussöffnung in den ersten Formhohlraum (36), wobei die Formangussöffnung in einer Weise gegenüber den Hinterschneidungen angeordnet ist, so dass das Formmaterial in einer Richtung parallel zu den seitlichen Wänden der Hinterschneidungen und entlang der Länge der Hinterschneidungen in den ersten Formhohlraum (36) einströmt;
- Abkühlen des optischen Materials in dem ersten Formhohlraum (36), wobei das optische Material in einem Kühlkontakt mit den Hinterschneidungen steht, so dass am Ende der Kühlzeit ein erster Abschnitt (14) des optischen Bauteils (12) ausgebildet ist, wobei der erste Abschnitt mindestens zwei langgestreckte Leitwände (15) einschließlich einer vorderen Oberfläche, einer gegenüberliegenden hinteren Oberfläche und zwei seitlichen Oberflächen umfasst;
- Bereitstellen eines zweiten Formhohlraums (39), der zwischen dem ersten Abschnitt (14) des optischen Bauteils (12) und einer zweiten Formkappe ausgebildet ist;
- Einspritzen einer zweiten Menge des optischen Materials in den zweiten Formhohlraum (39) durch eine zweite Formangussöffnung, wobei die Formangussöffnung in Ausrichtung mit den zwei seitlichen Oberflächen der langgestreckten Leitwände (15) positioniert ist, um der Strömung des geschmolzenen optischen Materials zu erlauben, einen Formbefüllungsweg entlang der langgestreckten Leitwände (15) zu folgen und mindestens zwei voneinander beabstandete kontinuierliche Ströme zu bilden, um dadurch den zweiten Formhohlraum (39) durch das Entfernen von Gas und das Sicherstellen, dass sich keine Blasen in dem geformten optischen Bauteil (12) bilden, richtig zu entlüften, so dass das optische Bauteil (12) frei von Verzerrungen ist, die durch den Spritzgießprozess verursacht sind.

2. Eine optische Linse (12), die in einer Form durch Spritzgießen mittels Einspritzen eines ersten geschmolzenen Materials in zwei Einspritzvorgängen unter Verwendung eines Zwei-Schritt-Verfahrens hergestellt ist, die optische Linse (12) umfasst:
- eine erste Oberfläche (13) mit einem ersten Umfang und eine zweite Oberfläche (18) mit einem zweiten Umfang;
- einen Linsenkörper (14,17), der zwischen der ersten Oberfläche (13) und der zweiten Oberfläche (18) definiert ist, damit ein Lichtstrahl durch die erste Oberfläche (13) in die Linse eintreten und durch die zweite Oberfläche (18) aus der Linse austreten kann, wobei die erste Oberfläche (13) in dem ersten Einspritzvorgang spritzgegossen ist und die zweite Oberfläche (18) in einem zweiten Einspritzvorgang spritzgegossen ist;
- ein erster Angussrest, der an dem ersten Umfang angeordnet ist und ein zweiter Angussrest, der an dem zweiten Umfang angeordnet ist;
- ein erstes Schmelzeströmungsmuster, das mindestens zwei beabstandete und kontinuierliche Ströme umfasst, die sich vollständig innerhalb des ersten Umfangs erstrecken, eingespritzt durch die erste Angussöffnung in dem ersten Einspritzvorgang und ein zweites Strömungsmuster, das mindestens zwei beabstandete und kontinuierliche Ströme umfasst, die sich vollständig innerhalb des zweiten Umfangs erstrecken, eingespritzt durch die zweite Angussöffnung in einem zweiten Einspritzvorgang, wobei das erste und zweite Strömungsmuster mittels optischer Prüfvorrichtungen sichtbar sind.

## Revendications

1. Procédé de moulage par injection d'un élément optique (12) comprenant :
- fournir une première cavité de moulage (36) formée entre un premier couvercle de moule et un noyau de moule, le premier couvercle de moule ayant une surface d'injection, le noyau de moule ayant une surface d'injection et au moins deux contre-dépouilles, chacune des contre-dépouilles ayant deux parois latérales, une profondeur, une largeur et une longueur;
- injecter une première quantité d'un matériau optique fondu dans la première cavité de moulage (36) par une première entrée de moule, laquelle entrée est située à l'opposé des contre-dépouilles de sorte que le matériau de moulage s'écoule à l'intérieur de la première cavité de moulage (36) dans une direction qui est parallèle aux parois latérales des contre-dépouilles et sur la longueur des contre-dépouilles;
- refroidir le matériau optique dans la première cavité de moulage (36), le matériau optique établissant un contact de refroidissement avec les parois des contre-dépouilles de sorte qu'à la fin de la période de refroidissement, une première section (14) de l'élément optique (12) est formée, la première section comprenant au moins deux cloisons allongées (15) formées par le matériau moulé dans les contre-dépouilles, chaque cloison allongée (15) comprenant une surface frontale, une surface arrière opposée et deux surfaces latérales;
- fournir une deuxième cavité de moulage (39) formée entre la première section (14) de l'élément optique (12) et un deuxième couvercle de moule;
- injecter une deuxième quantité du matériau optique dans la deuxième cavité de moulage (39) par une deuxième entrée de moule, laquelle entrée est alignée aux deux surfaces latérales des cloisons allongées (15) de sorte que l'écoulement du matériau optique fondu puisse suivre une trajectoire de remplissage de moule le long des cloisons allongées (15) et former au moins deux circuits d'écoulement espacés et ininterrompus, créant ainsi un dégazage adéquat de la deuxième cavité de moulage (39) pour éliminer les gaz et éviter que des bulles puissent se former dans l'élément optique moulé (12), ce qui permet à l'élément optique (12) d'être dépourvu de distorsion résultant du procédé de moulage par injection.

2. Une lentille optique (12) réalisée par moulage par injection d'un seul matériau fondu dans un moule en utilisant deux charges d'injection lors d'un procédé en deux étapes, la lentille optique (12) comprenant :
- une première surface (13) ayant une première périphérie et une deuxième surface (18) ayant une deuxième périphérie;
- un corps de lentille (14, 17), défini entre la première surface (13) et la deuxième surface (18), permettant à un faisceau lumineux d'entrer dans la lentille par la première surface (13) et d'en ressortir par la deuxième surface (18), la première surface (13) étant moulée par injection lors de la première charge d'injection et la deuxième surface (18) lors de la deuxième charge d'injection;
- un premier repère d'entrée de moule situé à la première périphérie et un deuxième repère d'entrée de moule situé à la deuxième périphérie;
- un premier motif d'écoulement de matière fondue comprenant au moins deux circuits d'écoulements espacés et ininterrompus qui s'étendent entièrement dans la première périphérie injectée par la première entrée de moule lors de la première charge d'injection et un deuxième motif d'écoulement de matière fondue comprenant au moins deux circuits d'écoulements espacés et ininterrompus qui s'étendent entièrement dans la deuxième périphérie injectée par la deuxième entrée de moule lors de la deuxième charge d'injection, les premier et deuxième motifs d'écoulement de matière fondue étant visibles à l'aide de dispositifs d'analyse optiques.
